# DEMANDE DE BREVET EUROPEEN

(11) **EP 2 578 964 A1**
(43) Date de publication de la demande: **10.04.2013**
(21) Numéro de dépôt: 12186459.9
(22) Date de dépôt: 28.09.2012
(51) Int. Cl.: F24J 2/52, E04D 3/40

(54) **Dispositif de support de surtoiture et procédé de réalisation d'une surtoiture au moyen de ce dispositif**

(30) Priorité: 03.10.2011 FR 1158899
(71) Demandeur: ICOPAL SAS, 92184 Antony Cedex (FR)
(72) Inventeur: Fabvier, Bruno, 92200 Neuilly sur Seine (FR)
(74) Mandataire: Lenne, Laurence

(57) **Abrégé**

L'invention concerne un dispositif de support (1A, 1B) de surtoiture comportant un profilé de support comportant une platine (2A) et un piétement (3A) en saillie solidaire de la surface supérieure de ladite platine.

Selon l'invention, il comporte également au moins une feuille souple (4A), dite première feuille, recouvrant le pourtour de ladite platine (2A) et fixée à ladite platine (2A) par des moyens mécaniques (5A) de type rivets, vis ou boulons, goujons ou équivalents.

## Description

L'invention concerne un dispositif de support de surtoiture et un procédé de réalisation d'une surtoiture au moyen de ce dispositif.

Dans de nombreux cas de toitures, il est nécessaire de fixer au-dessus du plan de la toiture (à une distance de quelques cm à quelques dizaines de cm) des éléments constructifs, décoratifs ou autres, appelés communément surtoitures. Les charges rapportées sont en général solidarisées avec l'élément porteur (bac acier, dalle béton, panneaux de bois) au travers de l'étanchéité et de l'isolation thermique éventuelle par des potelets, des émergences, des piètements de diverses natures. L'étanchéité peut devoir être perforée, la rendant ainsi impropre à son usage premier et primordial et nécessitant une reprise de l'étanchéite.

Le document de brevet FR 2 713 687 décrit un dispositif de support de surtoiture, sans percement du revêtement d'étanchéité.

Ce dispositif de support d'une surtoiture de bâtiment destinée à être superposée à une couverture comprenant un élément porteur qui supporte une couche d'isolation thermique surmontée d'un revêtement d'étanchéité, comprend des supports quasi-ponctuels répartis sur le revêtement d'étanchéité, chaque support comprenant une platine fixée en place par collage sur le revêtement d'étanchéité, chaque support comprenant en outre un piètement quasi-ponctuel en saillie sur la platine et dépassant au-dessus de la couverture.

Si, grâce à un tel dispositif, il est envisagé de supprimer tout percement du revêtement d'étanchéité grâce à un collage de la platine, au lieu d'une fixation de cette dernière par des dispositifs mécaniques vissés traversants, et, s'il est possible de positionner les supports indépendamment de la structure porteuse, il s'avère qu'un tel collage de la platine s'avère insuffisant pour résister aux efforts d'arrachement vertical et aux efforts de soulèvement ou d'arrachement par le vent, en particulier lors du montage d'une surtoiture en pente et d'éléments de surtoiture non parallèles au plan de la toiture.

Par ailleurs, un autre type de dispositif de support de surtoiture est connu du document de brevet FR 2 956 423 qui comporte une platine et un piétement en saillie solidaire de la surface supérieure de la platine et qui comporte également un plastron formé d'une plaque ou d'une feuille disposée sous la platine et fixée à la platine par des moyens mécaniques.

Un tel agencement pose également un problème de résistance aux efforts d'arrachement vertical et aux efforts de soulèvement ou d'arrachement par le vent, en particulier lors du montage d'une surtoiture en pente et d'éléments de surtoiture non parallèles au plan de la toiture. En effet, lors de tels efforts, toute la charge est transmise par traction des moyens mécaniques sur le plastron inférieur et il s'en suit un risque de déboutonnage ou détachement des têtes des moyens mécaniques au travers de la feuille. Il en résulte qu'en pratique, il faut utiliser un plastron particulièrement résistant au poinçonnement avec une armature quasi-rigide de type polyester non-tissé lourd et onéreux.

Or l'utilisation d'un plastron quasi-rigide rend complexe la soudure sur le revêtement d'étanchéité, ce plastron ne pouvant pas être facilement plié lors de cette soudure.

De plus toute la partie du plastron située sous la platine du piétement est totalement rigide ce qui rend la soudure de l'ensemble particulièrement difficile.

L'invention résout ces problèmes techniques en proposant un dispositif de support de surtoiture, par exemple des capteurs solaires thermiques ou photovoltaïques, qui assure tout autant une bonne résistance aux efforts de soulèvement et d'arrachement qu'une continuité du revêtement d'étanchéité. Par ailleurs, la mise en oeuvre de ce dispositif de support sur une toiture pour la réalisation d'une surtoiture est extrêmement rapide et simple.

Pour ce faire, l'invention propose un dispositif de support de surtoiture comportant une platine et un piétement en saillie solidaire de la surface supérieure de ladite platine, **caractérisé en ce qu'il** comporte également au moins une feuille souple, dite première feuille, recouvrant le pourtour de ladite platine et fixée à ladite platine par des moyens mécaniques de type rivets, vis, boulons, goujons ou équivalents.

Un tel dispositif de support est de préférence fabriqué en usine.

Grâce à l'invention, l'effort en arrachement est transmis en traction sur la feuille souple par toute la surface du pourtour de la platine ce qui permet d'utiliser une telle feuille effectivement souple.

L'invention concerne également un procédé de réalisation d'un support de surtoiture, au moyen d'un dispositif de support, une pluralité de dits dispositifs de support étant posée sur un revêtement d'étanchéité d'une toiture, le matériau de ladite première feuille étant de même nature chimique que ledit revêtement et la surtoiture étant ultérieurement fixée sur lesdits piétements de chaque dispositif de support, **caractérisé en ce que** la surface inférieure de ladite feuille dépassant de la platine de chaque dispositif de support est soudée sur le revêtement d'étanchéité.

Le soudage de la surface inférieure de la feuille souple est particulièrement aisé car, de par sa souplesse, cette feuille peut être pliée vers le haut pour l'application d'un chalumeau ou d'un pistolet d'air chaud, la platine étant posée sur le revêtement d'étanchéité.

L'invention permet de s'affranchir des problèmes liés à la réalisation de l'étanchéité tout en permettant que les efforts soient répartis de manière optimale sur l'élément porteur, indépendamment de la configuration de la charpente, les dispositifs de support pouvant être disposés en n'importe quel point de la toiture. Notamment, l'assemblage des supports sans percement de la membrane d'étanchéité garantit une étanchéité de l'ouvrage optimale car totalement identique à un ouvrage traditionnel.

L'invention est décrite ci-après plus en détail à l'aide de figures représentant des modes de réalisation préférés de l'invention.
La figure 1 est une vue en coupe verticale d'un dispositif de support conforme à l'invention selon un premier mode de réalisation.
La figure 2 est une vue de dessus de ce même dispositif de support.
La figure 3 est une vue en coupe verticale de ce même dispositif de support mis en place sur la toiture.
La figure 4 est une vue en coupe verticale d'un dispositif de support conforme à l'invention selon un second mode de réalisation.
La figure 5 est une vue en coupe verticale de ce même dispositif de support mis en place sur la toiture.

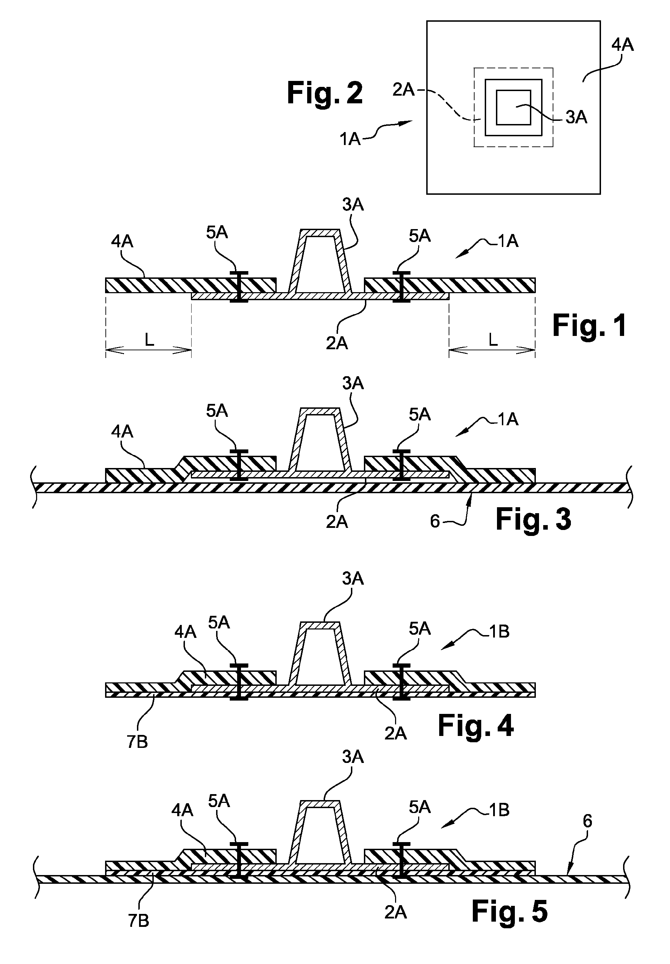

Les figures 1 et 2 représentent un premier mode de réalisation d'un dispositif de support conforme à l'invention.

Ce dispositif de support 1A de surtoiture comporte une platine 2A et un piétement 3A en saillie solidaire de la surface supérieure de la platine et une feuille souple 4A, dite première feuille, recouvrant le pourtour de la platine 2A et fixée à la surface supérieure de la platine par des moyens mécaniques 5A de type rivets, vis, boulons, goujons ou équivalents.

Selon l'exemple représenté, le profilé de support 2A, 3A est de type quasi-ponctuel et la platine présente de préférence une surface sensiblement carré comprise entre 100 et 400 cm². Cependant, l'invention s'applique également à un profilé de support linéaire de longueur relativement importante de plusieurs mètres.

La platine métallique 2A ainsi que le piétement 3A sont de préférence en acier inoxydable d'épaisseur comprise entre 0,5 et 2,5mm,

La feuille 4A dépasse tout autour de la platine 2A d'une largeur suffisante pour permettre une soudure correcte sur le revêtement d'étanchéité 6, cette largeur L étant comprise entre 5 à 10 cm selon la nature des matériaux en présence, et est pourvue d'un orifice central de passage du piétement 3A.

Le matériau de la feuille 4A est soudable au chalumeau ou à l'air chaud et est avantageusement armée.

A titre d'exemples, elle peut être constituée d'une pièce de membrane armée en bitume SBS SEBS, SIS, APP, POCB ou APAO ou tout polymère ou mélange de polymères miscibles au bitume.

Elle peut être armée d'un non tissé de polyester compris entre 180g/m² et 320g/m², d'un tissu de verre ou d'une grille de verre compris entre 50g/m² et 250g/m² ou de composites classiques de type voile de verre avec tissu ou grille de verre.

De préférence, elle est constituée d'une pièce de membrane en bitume SBS armée d'un non tissé polyester de 180g/m².

Comme illustré sur la figure 3, une pluralité de tels dispositifs de support 1A est posée sur un revêtement d'étanchéité 6 d'une toiture pour la mise en place d'une structure de surtoiture, pour travaux neufs ou de réfection.

La toiture est réalisée d'une structure de couches non représentées disposées sur l'élément porteur de la toiture, à savoir plusieurs couches successives pouvant comprendre un pare-vapeur, un ou plusieurs lits d'isolant thermique selon la performance thermique recherchée et éventuellement plusieurs couches d'étanchéité. Cette structure comporte en surface un revêtement d'étanchéité 6.

La surface inférieure de la feuille 4A dépassant de la platine 2A de chaque dispositif de support est soudée au chalumeau ou à l'air chaud sur le revêtement d'étanchéité 6 et la surtoiture est fixée mécaniquement sur les piétements 3A de chaque dispositif de support et la surtoiture peut être fixée directement sur ces piétements 3A, par exemple par des vis ou rivets.

La surtoiture peut également être fixée indirectement par l'intermédiaire d'une structure parallèle au plan de la toiture ou en pente, par exemple par l'intermédiaire de supports à section triangulaire, si l'on désire l'orienter hors du plan de la toiture.

Pour ce faire, le revêtement d'étanchéité 6 et la feuille 4A sont de même nature chimique.

Si ce revêtement d'étanchéité 6 est bitumineux, la feuille 4A peut être constituée d'une pièce de membrane armée en bitume SBS SEBS, SIS, APP, POCB ou APAO. Le soudage est alors réalisé au chalumeau ou à l'air chaud.

Si ce revêtement d'étanchéité 6 est en matière synthétique thermoplastique, la feuille 4A peut être constituée d'une pièce de membrane en PVC plastifié, PVC-EVA, TPO, PE, PP. Le soudage est alors réalisé à l'air chaud.

Grâce à la souplesse de la feuille 4A, le soudage des parties débordantes de la feuille 4A sur le revêtement d'étanchéité 6 est particulièrement simple à réaliser. Ces parties peuvent en effet être repliées vers le haut pour permettre le passage du chalumeau ou du pistolet d'air chaud puis appliquée contre le revêtement d'étanchéité 6.

La figure 4 représente un second mode de réalisation d'un dispositif de support conforme à l'invention.

Comme précédemment, ce dispositif de support 1B de surtoiture comporte une platine 2A et un piétement 3A en saillie solidaire de la surface supérieure de la platine et une première feuille souple 4A solidarisée à la surface supérieure de la platine 2A et de surface supérieure à la surface supérieure de la platine 2A. Les caractéristiques de dimension et de composition sont identiques au premier mode de réalisation.

Le dispositif de support 1B comporte en plus une seconde feuille souple 7B solidarisée à la surface inférieure de la platine 2A grâce aux moyens mécaniques 5A de type rivets, vis ou boulons, et à la face inférieure de la première feuille 4B et, de préférence, de surface sensiblement identique à la surface de la première feuille 4B, le matériau de cette seconde feuille 7B étant également soudable au chalumeau ou à l'air chaud

La platine 2A est ainsi prise en sandwich entre les deux feuilles 4A, 7B, ce qui renforce encore sa résistance à l'arrachement.

Comme illustré sur la figure 5, une pluralité de tels dispositifs de support 1B sont posés sur un revêtement d'étanchéité 6 d'une toiture pour la mise en place d'une structure de surtoiture, pour travaux neufs ou de réfection.

La surface inférieure de la seconde feuille 7B de chaque dispositif de support est soudée au chalumeau ou à l'air chaud sur le revêtement d'étanchéité 6 et la surtoiture est fixée mécaniquement sur les piétements 3A de chaque dispositif de support.

Pour ce faire, le revêtement d'étanchéité 6 et la seconde feuille 4B sont de même nature chimique.

## Revendications

1. Dispositif de support (1A, 1B) de surtoiture comportant une platine (2A) et un piétement (3A) en saillie solidaire de la surface supérieure de ladite platine, **caractérisé en ce qu'il** comporte également au moins une feuille souple (4A), dite première feuille, recouvrant le pourtour de ladite platine (2A) et fixée à ladite platine (2A) par des moyens mécaniques (5A) de type rivets, vis, boulons, goujons ou équivalents.

2. Dispositif selon la revendication 1, **caractérisé en ce que** ladite première feuille (4A) est pourvue d'un orifice central de passage dudit piétement.

3. Dispositif selon la revendication 1 ou 2, **caractérisé en ce que** le matériau de ladite feuille (4A) est soudable au chalumeau ou à l'air chaud.

4. Dispositif selon l'une des revendications précédentes, **caractérisé en ce qu'il** comporte une seconde feuille souple (7B) solidarisée à la surface inférieure de la platine (2A) grâce auxdits moyens mécaniques (5A) et à la surface inférieure de ladite première feuille (4A).

5. Dispositif selon la revendication précédente, **caractérisé en ce que** le matériau de ladite seconde feuille (7B) est également soudable au chalumeau ou à l'air chaud.

6. Dispositif selon l'une des revendications précédentes, **caractérisé en ce que** la ou les feuille(s) est (sont) armée(s) d'un non tissé de polyester.

7. Dispositif selon l'une des revendications 1 à 5, **caractérisé en ce que** la ou les feuille(s) est (sont) armée(s) d'un tissu de verre.

8. Dispositif selon l'une des revendications précédentes, **caractérisé en ce que** la ou les feuille(s) dépasse(nt) de ladite platine d'une longueur de 5 à 10 cm.

9. Dispositif selon l'une des revendications précédentes, **caractérisé en ce que** ladite platine (2A) présente une surface comprise entre 100 et 400 cm².

10. Procédé de réalisation d'un support de surtoiture, au moyen d'un dispositif de support selon l'une des revendications 1 à 3, une pluralité de dits dispositifs de support (1A) étant posés sur un revêtement d'étanchéité (6) d'une toiture, le matériau de ladite première feuille (4A) étant de même nature chimique que ledit revêtement (6) et la surtoiture étant ultérieurement fixée sur lesdits piétements (3A) de chaque dispositif de support, **caractérisé en ce que** la surface inférieure de ladite feuille (4A) dépassant de la platine (2A) de chaque dispositif de support est soudée sur le revêtement d'étanchéité (6).
